# EUROPÄISCHE PATENTANMELDUNG

(11) **EP 1 298 535 A2**
(43) Veröffentlichungstag der Anmeldung: **02.04.2003**
(21) Anmeldenummer: 02102356.9
(22) Anmeldetag: 13.09.2002
(51) Int. Cl.: G06F 17/28

(54) **Kommunikationssystem und mobiles Kommunikationsendgerät zur Verarbeitung/Übersetzung von Texten**

(30) Priorität: 28.09.2001 DE 10147902
(71) Anmelder: SIEMENS AKTIENGESELLSCHAFT, 80333 München (DE)
(72) Erfinder: Obermanns, Sebastian, 46395 Bocholt (DE); Schmick, Markus, 46286 Dorsten (DE)

(57) **Zusammenfassung**

Es wird ein Kommunikationssystem mit der technischen Möglichkeit vorgeschlagen, einen zu übersetzenden Text von einem mobilen Kommunikationsendgerät aus als grafisches Bild an einen Übersetzungs-Dienstanbieter zu schicken, der den grafisch vorliegenden Text beispielsweise mit OCR-Technik extrahiert, anschließend den extrahierten Text beispielsweise mit einem Sprachübersetzungsprogramm übersetzt und dann den übersetzten Text wieder zurückschickt. Außerdem wird ein mobiles Kommunikationsendgerät vorgeschlagen, das einen zu übersetzenden Text mit einer zugehörigen Kamera grafisch ablichten und das so erzeugte grafische Bild an den Übersetzungs-Dienstanbieter für die Übersetzung übermitteln kann. Das mobile Kommunikationsendgerät empfängt einen vom Übersetzungs-Dienstanbieter übersetzten Text wieder und stellt diesen auf seiner zugehörigen Bildanzeige zusammen mit dem ursprünglichen Text oder ohne diesen ursprünglichen Text dar.

## Beschreibung

Die Erfindung betrifft ein Kommunikationssystem gemäß dem Oberbegriff des Anspruchs 1 und ein mobiles Kommunikationsendgerät für den Einsatz in einem solchen Kommunikationssystem gemäß dem Oberbegriff des Anspruchs 8.

Bei Urlaubsreisen, Dienstreisen usw. in fremdsprachliche Länder erzeugt die Unfähigkeit, überall präsente Texte nicht lesen zu können, ein Unsicherheitsgefühl und Unbehagen.

Beispiele für solche Texte sind Speisekarten im Restaurant, Texte auf Verkehrsschildern, die Bedienungsanleitung auf Fahrkartenautomaten usw..

Auf der anderen Seite sind meist z. B. funktechnische Kommunikationssysteme, d. h. Mobilfunknetze und mobile Kommunikationsendgeräte für die Anwendung in einem solchen Kommunikationssystem vorhanden.

Um die in der fremden Sprache, später auch als erste Sprache oder Quellsprache bezeichnet, vorliegenden textlichen Inhalte verstehen zu können, ist es notwendig, ein Lexikon in Buchform oder elektronischer Form für eine Übersetzung dabei zu haben. Dabei ist es sehr umständlich, die fremdsprachlichen textlichen Inhalte per manueller Suche oder Eingabe in ein elektronisches Gerät nachzuschlagen. Die Übersetzung ist wesentlich erschwert, falls die Fremdsprache nicht in einer bekannten Schriftart geschrieben ist. Es ist zum Beispiel kompliziert, ohne längere Übung chinesische oder arabische Schriftzeichen in einem Lexikon aufzufinden.

Eine nichttechnische Alternative wäre ein menschlicher Dolmetscher. Ein solcher Dolmetscher steht jedoch nicht jederzeit für jedermann zur Verfügung.

Aufgabe der vorliegenden Erfindung ist es, ausgehend von einem Kommunikationssystem der eingangs genannten Art eine technische Möglichkeit zu schaffen, durch die in wesentlich einfacherer Art und Weise eine Übersetzung in fremder Sprache vorliegender textlicher Inhalte zur Verfügung gestellt werden kann. Ferner ist es Aufgabe der Erfindung, ausgehend von einem mobilen Kommunikationsendgerät der eingangs genannten Art, eine solche technische Verbesserung anzugeben, dass mit diesem mobilen Kommunikationsendgerät schnell eine Übersetzung von in einer fremden Sprache vorliegender textlicher Inhalte erhalten werden kann.

Der erste Teil der vorgenannten Aufgabe wird erfindungsgemäß durch ein Kommunikationssystem gelöst, das die kennzeichnenden Merkmale des Anspruchs 1 aufweist. Der zweite Teil der vorgenannten Aufgabe wird erfindungsgemäß durch ein mobiles Kommunikationsendgerät gelöst, dass die kennzeichnenden Merkmale des Anspruchs 8 aufweist.

Das erfindungsgemäße Kommunikationssystem löst das angegebene Problem in der Weise, dass zusätzlich ein Übersetzungs-Dienstanbieter vorgesehen ist, der ihm in einer ersten Sprache zugeleitete textliche Inhalte in eine zweite Sprache, das heißt eine Zielsprache, die verstanden wird, übersetzt und der die übersetzten textlichen Inhalte an einen Empfänger wieder zurückschickt.

Das Kommunikationssystem ist dabei nicht auf ein einheitliches Kommunikationssystem beschränkt. Vielmehr umfasst der Begriff Kommunikationssystem z. B. auch ein Zusammenspiel von einem Mobilfunknetz und dem Internet, die jeweils für sich als ein Kommunikationssystem aufgefasst werden könnten. Es können auch andere Kommunikationssysteme eingebunden sein, die z. B. unter den Abkürzungen PLMN (Public Land Mobile Network), ISDN (Integrated Services Digital Network), PSTN (Public Switched Telephon Network) bekannt sind. Vor diesem Hintergrund ist es denkbar, dass zwar ein Übersetzungsvorgang von einem mobilen Kommunikationsendgerät ausgelöst wird, der Übersetzungs-Dienstanbieter aber im Internet angesiedelt ist.

Das erfindungsgemäße mobile Kommunikationsendgerät löst das angegebene Problem in der Weise, dass es eine Bildaufnahmeeinheit, beispielsweise eine Kamera, beigeordnet hat, durch die es Bilder in grafischer Form aufnehmen kann. Ferner weist das erfindungsgemäße mobile Kommunikationsendgerät elektronische Komponenten auf, durch die es die von der Kamera aufgenommenen grafischen Bilder an einen Übersetztungs-Dienstanbieter innerhalb des gesamten Kommunikationssystems senden kann. Schließlich weist das erfindungsgemäße mobile Kommunikationsendgerät elektronische Komponenten auf, durch die es von dem oben angesprochenen Übersetzungs-Dienstanbieter zurückgeschickte, übersetzte textliche Inhalte gegebenenfalls zusammen mit weiteren bildlichen Informationen, beispielsweise denen, die dem Übersetzungs-Dienstanbieter als grafisches Bild übersandt worden sind, empfangen und anzeigen kann.

Bei dem angesprochenen Übersetzungs-Dienstanbieter ist vorausgesetzt, dass er in einer ersten Sprache erhaltene textliche Inhalte in eine zweite Sprache übersetzen und den übersetzten textlichen Inhalt an einen Adressaten zurückschicken kann. Der Adressat, an den zurückgeschickt wird, wird zwar in der Regel derjenige sein, der eine Übersetzung angefordert hat. Dies muss aber nicht zwingend der Fall sein. In diesem Fall muss aber dem Übersetzungs-Dienstanbieter noch mitgeteilt werden können, wer der Adressat ist.

Vor dem oben beschriebenen Hintergrund wurde davon ausgegangen, dass neben bereits in Textform vorliegenden textlichen Inhalten auch grafische Bilder an den Übersetzungs-Dienstanbieter gesendet werden können, die bildliche Darstellungen von Schriftzügen enthalten. Die bereits in Textform vorliegenden textlichen Inhalte können beispielsweise durch die Tastatur des betreffenden Kommunikationsendgeräts eingegeben worden sein.

Beide Lösungsansätze basieren auf dem Prinzip, einen bereits in Textform vorliegenden oder aber auch nur grafisch vorliegenden textlichen Inhalt, der jeweils einen fremdsprachlichen Inhalt wiedergibt, einem auf die betreffende Fremdsprache spezialisierten Übersetzungs-Dienstanbieter zuzuleiten, der dann den fremdsprachlichen Inhalt übersetzt und wieder zurückschickt.

Der Vorteil eines solchen Übersetzungs-Dienstanbieter ist, dass er seinen Übersetzungsdienst weltweit z. B. über das Telefonnetz oder das Internet anbietet. Auf diese Weise kann eine sehr große Anzahl von Teilnehmern den einen Übersetzungs-Dienstanbieter nutzen, und das jeweils weltweit.

Ein weiterer Vorteil ist, dass dem Übersetzungs-Dienstanbieter textliche Inhalte nicht nur in Textform sondern auch als grafisches Bild übersandt werden kann. Es bedarf somit nur einer grafischen Aufnahme von Schriftzügen und der Übersetzungs-Dienstanbieter vollführt alle übrigen Funktionen für eine Übersetzung. Mit anderen Worten, es braucht nur ein Bild mit einem Schriftzug erzeugt werden, das dann als Pixeldaten vorliegt. Einige bekannte Formatbeispiele für Pixeldaten sind hierbei das JPEG-Datenformat, das PNG-Datenformat, das TIFF-Datenformat usw., die günstigerweise zur Anwendung kommen.

Der Übersetzungs-Dienstanbieter extrahiert den textlichen Inhalt aus dem grafischen Bild, das ihm zugeleitet wurde, und weist dem extrahierten textlichen Inhalt basierend auf einer vorgegebenen ersten Sprache einen entsprechenden textlichen Inhalt zu. Dies geschieht durch Vorgänge, wie sie bei OCR-Programmen (Optical Character Recognition) bekannt sind.

Nachdem der Bedeutungsinhalt eines zugeleiteten textlichen Inhalts in der ersten Sprache bekannt ist, kann dieser mittels eines entsprechenden Übersetzungsprogramms in eine vorgegebenen zweite Sprache übersetzt werden. Der übersetzte neue textliche Inhalt kann dann an einen vorgegebenen Empfänger übersandt werden, wobei, wie oben schon gesagt, der vorgegebene Empfänger nicht zwangsläufig der Absender des ursprünglich zugeleiteten textlichen Inhalts sein muss.

Handelt es sich bei dem Empfänger um einen anderen Empfänger, so sind dem Dienstanbieter die entsprechenden Informationen ebenfalls mitzuteilen. Gleiches gilt für die gewünschte erste und zweite Sprache, falls jeweils mehrere Möglichkeiten zur Verfügung stehen. Bezüglich der ersten Sprache könnte es jedoch noch so sein, dass der Dienstanbieter selbst die erste Sprache identifiziert. Für eine automatische Erkennung der zweiten Sprache könnte der Übersetzungs-Dienstanbieter die Sprache des sogenannten Userinterfaces des die Übersetzung angeforderten mobilen Kommunikationsendgeräts benutzen. Die Sprache des Userinterfaces ist dem Übersetzungs-Dienstanbieter dann mit zu übermitteln.

Vorteilhafte Ausgestaltungen der Erfindung sind Gegenstand von Unteransprüchen.

Wird ein übersetzter textlicher Inhalt zurückgeschickt, kann dies lösgelöst von der Übermittlung anderer Informationen geschehen. Es kann aber auch beispielsweise im Zusammenhang mit allen Informationen geschehen, mit denen der zu übersetzende textliche Inhalt zugeleitet worden ist. Dabei können die übersetzten textlichen Inhalte entweder neben den ursprünglichen textlichen Inhalten oder aber direkt an Stelle der ursprünglichen textlichen Inhalte platziert sein. Im ersten Fall ist ein paralleles Lesen beider Inhalte möglich. Im zweiten Fall ist praktisch das Originalbild zu sehen, allerdings mit den übersetzten Texten.

In Kommunikationssystemen, die beispielsweise in der GSM (Global System for Mobile Communications)/GPRS (General Packet Radio Service)-Technik, UMTS (Universal Mobile Telecommunications System)-Technik oder einer ähnlichen Technik konzipiert sind, stellt es keine besonderen Probleme dar, die oben beschriebenen Lösungsansätze zu realisieren. Es ist dabei unwesentlich, ob die Übertragung leitungsvermittelt (PLMN-ISDN-Netz) oder paketvermittelt (PLMN, Internet) erfolgt.

Nachfolgend wird ein Ausführungsbeispiel der Erfindung näher beschrieben.

Ein Reisender, der von einem Übersetzungs-Dienstanbieter einen Text übersetzt haben möchte, benennt vorab die Sprache des zu übersetzenden Textes (Quellsprache) und die Sprache, in die der zu übersetzende Text übersetzt werden soll (Zielsprache). Die Informationen bleiben im mobilen Kommunikationsendgerät gespeichert, um mitübermittelt werden zu können.

Mit der digitalen Kamera des mobilen Kommunikationsendgeräts erzeugt der Reisende das Bild des Textes, dessen Übersetzung erwünscht ist.

Mit dem mobilen Kommunikationsendgerät stellt der Reisende eine Datenverbindung zu einem Übersetzungs-Dienstanbieter her, der zu einer Übersetzung der genannten Sprachen fähig ist. Anschließend sendet der Reisende das Bild mit den Sprachinformationen zum Übersetzungs-Dienstanbieter.

Der Übersetzungs-Dienstanbieter extrahiert den Text aus den empfangenen Bilddaten, z. B. mit Hilfe einer Texterkennungssoftware. Danach übersetzt er den Text, z. B. mit einer Sprachübersetzungssoftware.

Die benötigte Rechenleistung der verwendeten Computer sollte ausreichend sein, sodass die Übersetzung in kürzester Zeit erfolgen kann. Die erforderliche Rechenleistung für diese Aufgabe überfordert ein batteriebetriebenes mobiles Kommunikationsendgerät.

Den übersetzten Text schickt der Übersetzungs-Dienstanbieter zum mobilen Kommunikationsendgerät zurück. In einfacher Weise wäre dies in rein textueller Form. Im Fall, dass ein Bild mehrere Textstellen hat, sollte der Bezug zwischen Übersetzung und Original nicht verloren gehen. Dies kann dadurch geschehen, dass der Text in beiden Sprachen in textueller Form übertragen wird. In einer aufwendigeren Übermittlung könnte aber auch das originale Bild, in dem der fremdsprachige Text in der gewünschten Sprache ausgetauscht ist, übersandt werden. Dies ist nur bei einem mobilen Kommunikationsendgerät sinnvoll, das über eine Bildanzeige mit ausreichender Darstellungsmöglichkeit für den im Bild enthaltenen Text verfügt.

## Patentansprüche

1. Kommunikationssystem, das Dienstanbieter zur Verfügungstellung von Kommunikationsdiensten aufweist und dem mobile Kommunikationsendgeräte für die Abwicklung von Kommunikationen zugeordnet sind, **dadurch gekennzeichnet, dass** ein zusätzlicher Übersetzungs-Dienstanbieter vorgesehen ist, dem durch ein Kommunikationsendgerät in Textform generierte textliche Inhalte in einer ersten Sprache und/oder erzeugte grafische Bilder mit darin enthaltenen bildlichen Darstellungen von Schriften zuleitbar sind, durch den aus den zugeleiteten grafischen Bildern die darin enthaltenen Darstellungen von Schriften extrahiert sind, durch den den extrahierten Darstellungen von Schriften in Textform textliche Inhalte in einer ersten Sprache zugeordnet sind, durch den den in Textform vorliegenden textlichen Inhalten in der ersten Sprache in Textform textliche Inhalte in einer zweiten Sprache zugeordnet sind, und durch den die in Textform vorliegenden textlichen Inhalte in der zweiten Sprache an ein Empfängergerät zurückgeschickt sind, die von diesem empfangbar und anzeigbar sind.

2. Kommunikationssystem nach Anspruch 1, **dadurch gekennzeichnet, dass** durch den Übersetzungs-Dienstanbieter die in Textform zurückgeschickten textlichen Inhalte in der zweiten Sprache zusammen mit Bildinformationen zugeleiteter grafischer Bilder zurückgeschickt sind.

3. Kommunikationssystem nach Anspruch 2, **dadurch gekennzeichnet, dass** durch den Übersetzungs-Dienstanbieter die zurückgeschickten Bildinformationen und die in Textform vorliegenden textlichen Inhalte in der zweiten Sprache in der Weise zurückgeschickt sind, dass durch das Empfängergerät die ursprünglichen bildlichen Darstellungen von Schriften und gleichzeitig die in Textform vorliegenden textlichen Inhalte in der zweiten Sprache anzeigbar sind.

4. Kommunikationssystem nach Anspruch 2, **dadurch gekennzeichnet, dass** durch den Übersetzungs-Dienstanbieter die zurückgeschickten Bildinformationen und die in Textform vorliegenden textlichen Inhalte in der zweiten Sprache in der Weise zurückgeschickt sind, dass durch das Empfängergerät an Stelle der ursprünglichen bildlichen Darstellungen von Schriften die in Textform vorliegenden textlichen Inhalte in der zweiten Sprache anzeigbar sind.

5. Kommunikationssystem nach einem der vorherigen Ansprüche, **dadurch gekennzeichnet, dass** das Empfängergerät identisch ist mit dem Kommunikationsendgerät, durch das dem Übersetzungs-Dienstanbieter in Textform generierte textliche Inhalte in einer ersten Sprache und/oder erzeugte grafische Bilder mit darin enthaltenen bildlichen Darstellungen von Schriften zugeleitet sind.

6. Kommunikationssystem nach einem der vorherigen Ansprüche, **dadurch gekennzeichnet, dass** das Kommunikationsendgerät ein mobiles Kommunikationsendgerät ist, das nach einer Technik gemäß der GSM/GPRS-Technik, UMTS-Technik oder ähnlicher Technik arbeitet.

7. Kommunikationssystem nach einem der vorherigen Ansprüche, **dadurch gekennzeichnet, dass** Systeme wie das PLMN-System, Internet-System, ISDN-System, PSTN-System oder ähnliche Systeme umfasst sind.

8. Mobiles Kommunikationsendgerät für die Anwendung in einem Kommunikationssystem gemäß einem der Ansprüche 1 bis 7, das Eingabemittel für die Eingabe von Informationen und Anweisungen an das Gerät und eine Bildanzeige für ein visualisiertes Darstellen von Informationen aufweist, **dadurch gekennzeichnet, dass** eine Bildaufnahmeeinheit beigeordnet ist, durch die grafische Bilder aufnehmbar sind, dass elektronische Komponenten vorgesehen sind, durch die die aufgenommenen grafischen Bilder oder über die Eingabemittel eingegebene textliche Inhalte an einen Übersetzungs-Dienstanbieter übermittelbar sind, und dass elektronische Komponenten vorgesehen sind, durch die vom Übersetzungs-Dienstanbieter zurückübermittelte Informationen empfangbar und auf der Bildanzeige anzeigbar sind.
